**Europäisches Patentamt**

**European Patent Office**

**Office européen des brevets**

(11) Numéro de publication: **0 002 149**
**B2**

## (12) NOUVEAU FASCICULE DE BREVET EUROPEEN

(45) Date de publication du nouveau fascicule du brevet:
06.06.84

(51) Int. Cl.³: **F 16 J 15/32, B 60 T 11/16**

(21) Numéro de dépôt: **78400168.7**

(22) Date de dépôt: **09.11.78**

(54) Joint annulaire d'étanchéité pour générateurs de pression hydraulique.

(30) Priorité: **15.11.77 FR 7734341**

(43) Date de publication de la demande:
**30.05.79 Bulletin 79/11**

(45) Mention de la délivrance du brevet:
**15.04.81 Bulletin 81/15**

(45) Mention de la décision concernant l'opposition.
**06.06.84 Bulletin 84/23**

(84) Etats contractants désignés:
**DE GB SE**

(56) Documents cités:
**DE - A - 2 405 176**
**FR - A - 2 231 269**

(73) Titulaire: **SOCIETE ANONYME D.B.A., Centre Paris Pleyel, F-93521 St-Denis Cédex 01 (FR)**

(72) Inventeur: **Meyer, Yves, 3 allée du Pré Fleuri, F-95150 Taverny (FR)**
Inventeur: **Carré, Jean-Jacques, 100 Avenue du Président Wilson, F-93100 Montreuil (FR)**

(74) Mandataire: **Brullé, Jean et al, Service Brevets Bendix 44, rue François 1er, F-75008 Paris (FR)**

EP 0 002 149 B2

BUNDESDRUCKEREI BERLIN

**Description**

La présente invention se rapporte à un joint annulaire d'étanchéité, destiné plus particulièrement aux générateurs de pression hydraulique, tels que par exemple, les maître-cylindres et les émetteurs d'embrayage.

On connaît déjà, par le brevet FR-A-2 231 269, un joint d'étanchéité en matériau élastique du type à double lèvre, destiné à un générateur de pression hydraulique qui comporte un cylindre dont l'alésage présente un orifice de compensation de pression et un piston qui présente une gorge pour recevoir ledit joint; ledit joint traverse avec le piston, à partir d'une position de repos d'abord jusqu'à la fermeture dudit orifice une zone courte sans montée en pression, appelée course morte, et ensuite une zone longue de montée en pression, correspondant à la phase active; la lèvre extérieure dudit joint présente une surface extérieure de révolution légèrement bombée; le talon du corps dudit joint est, à l'état libre, en dépouille à partir de son plus grand diamètre vers son plus faible diamètre. L'extrémité libre de la lèvre extérieure présente un diamètre légèrement décroissant, à l'état libre et en fonctionnement, de manière à éviter le contact de cette extrémité de lèvre avec l'alésage dans lequel elle se déplace et permettre la pénétration d'un film d'huile utile à une bonne lubrification.

Le joint décrit dans le brevet français précité possède une lèvre extérieure ayant un contact relativement long avec la surface de l'alésage du cylindre sur laquelle elle s'applique, et ce contact est situé dans la partie médiane de la longueur de la lèvre. Cette disposition réduit l'usure par une répartition meilleure des points de contact mais présente l'inconvénient d'empêcher toute localisation précise des limites de la zone de contact, empêchant ainsi une détermination précise de la course morte de l'organe ou piston sur lequel le joint est monté, c'est-à-dire de la distance séparant l'orifice de compensation de la chambre de pression du bord de la zone de contact la plus proche de cet orifice. Les limites de la zone de contact sont variables d'un joint à l'autre, et donc la course morte correspondante aussi, sans qu'il soit possible de maîtriser cette variation.

De plus, le joint précité présente aussi l'inconvénient de laisser une trop grande course morte dans le déplacement du joint, la longueur de l'espace recueillant le film d'huile s'ajoutant à la distance entre le bord frontal du joint et l'orifice de compensation.

Une proposition pour remédier à cet inconvénient consisterait simplement à déplacer la zone de contact à l'extrémité libre de la lèvre extérieure. Mais cette proposition empêcherait la constitution d'un petit espace entre le joint et l'alésage à cette extrémité libre pour favoriser la pénétration d'un film d'huile, et ce film d'huile est nécessaire au bon fonctionnement pendant la phase active du déplacement du joint.

L'invention a pour but de remédier à ces inconvénients en proposant un nouveau joint annulaire qui autorise une détermination précise de la course morte de l'organe out piston sur lequel il est monté et une réduction maximum de cette course morte.

L'invention a également pour but de permettre une détermination précise de la course morte tout en préservant, au cours de la phase active du déplacement de l'organe, l'existence d'un espace entre l'extrémité de la lèvre extérieure et l'alésage dans lequel elle se déplace, espace dans lequel se forme le film d'huile.

Pour atteindre ce but, le joint d'étanchéité, selon l'invention, est monté dans la gorge de façon que le talon du corps dudit joint soit, en position de repos et pendant la course morte, en dépouille à partir de son plus grand diamètre vers son plus faible diamètre de manière à présenter un contact selon un cercle avec la paroi de la gorge, et le talon se plaque, pendant la phase active, sur toute sa surface contre la paroi de la gorge, de manière à provoquer un léger basculement de la lèvre extérieure, la lèvre extérieure présentant une section telle que:

— en position de repos et pendant la course morte, ladite section présente un contact étanche avec l'alésage du cylindre seulement selon le bord d'extrémité de sa surface extérieure qui est éloignée du talon,
— et telle que, pendant la phase active le bord d'extrémité s'écarte légèrement de l'alésage lors dudit basculement.

D'autres avantages et caractéristiques de l'invention apparaîtront dans la description qui va suivre d'un exemple de réalisation non limitatif de l'objet de l'invention, accompagné du dessin annexé dans lequel:

— la fig. 1 est une coupe du joint à l'état libre;
— la fig. 2 est une coupe du joint au montage au repos;
— la fig. 3 est une coupe du joint au cours de son déplacement pendant la phase active, dite aussi de montée en pression.

Si l'on considère les figures, le joint 10 est un élément annulaire en matériau élastique qui comprend un corps annulaire 12, une lèvre extérieure 14 et une lèvre intérieure 16.

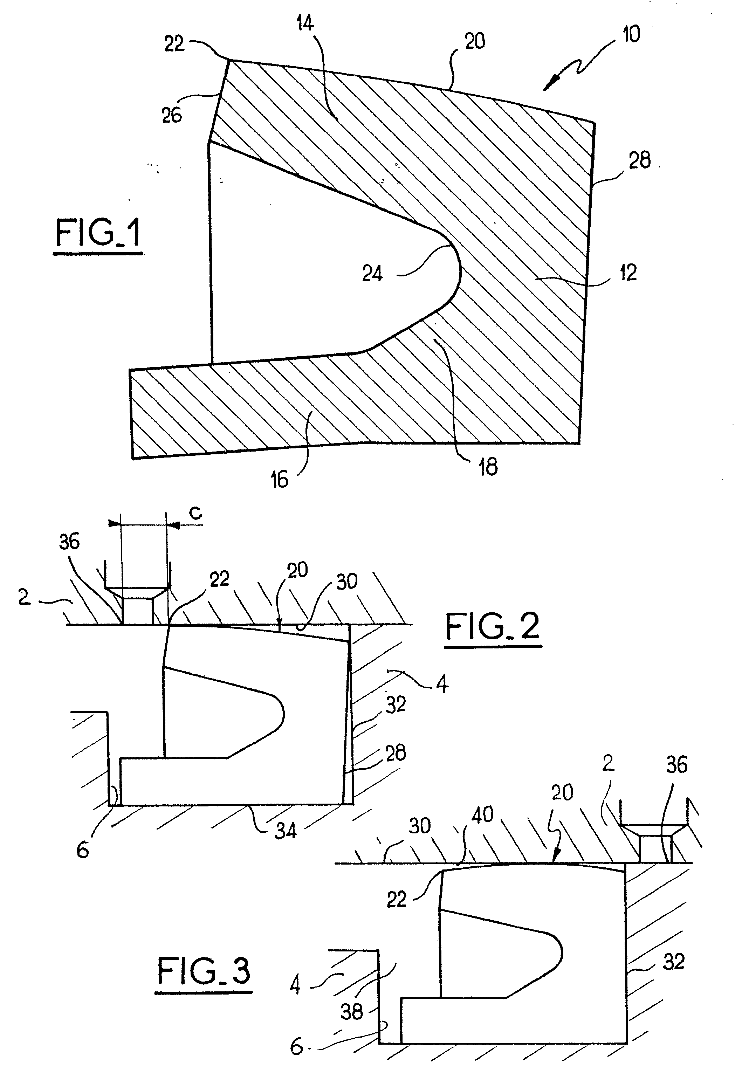

Sur la fig. 1, on a représenté le joint à l'état libre. La lèvre intérieure 16 est raccordée au corps 12 par l'intermédiaire d'une partie 18 de section croissante à partir de la lèvre 16 vers le corps 12 pour former un raccordement renforcé. De plus, la lèvre intérieure 16 s'étend dans une direction légèrement inclinée vers l'intérieur par rapport à l'axe du joint, l'extrémité libre de la lèvre intérieure étant légèrement plus proche de l'axe du joint que l'extrémité raccordée.

La lèvre extérieure 14 présente un profil extérieur 20 légèrement bombé de manière à ce que le diamètre de l'extrémité 22 de la lèvre 14 soit le plus grand diamètre de la lèvre 14. La lèvre 14 est de section croissante à partir de son extrémité libre vers son extrémité de raccordement pour offrir aussi un raccordement renforcé. Les deux parties de raccordement des lèvres 14 et 16 sont raccordées entre elles par un profil circulaire 24 d'un rayon de l'ordre de grandeur de l'épaisseur des extrémités des lèvres. La face fontale extrême 26 de la lèvre supérieure 14 est légèrement inclinée par rapport à une perpendiculaire à l'axe de la coupelle d'un angle voisin de 15°.

La face arrière du corps 12, opposée aux lèvres, ou talon 28 est en dépouille à partie de son bord de plus grand diamètre vers son bord de plus faible diamètre.

Sur la fig. 2, le joint est représenté monté à l'état de repos dans la gorge 6 d'un piston 9 de maître-cylindre 2, monté lui-même dans un alésage 30 du maître-cylindre. La gorge 6 présente une paroi d'appui 32, une surface cylindrique 34 sur laquelle s'applique la lèvre intérieure 16. La lèvre intérieure 16 s'applique avec une précontrainte élastique sur cette surface 34 de la gorge 6, grâce à son inclinaison visible sur la fig. 1, à l'état libre; dans cet état de repos, le talon est en contact sur la paroi d'appui 32 de la gorge selon un cercle qui est le cercle de plus grand diamètre du talon 28, et la lèvre extérieure est en contact avec l'alésage 30 selon sa seule extrémité 22. On voit que la distance c représentant le déplacement préalable avant la fermeture de l'orifice de compensation 36 peut être appréhendée de façon précise et résulte de la construction du joint, et que, de plus, cette distance est réduite au minimum compte tenu de la localisation extrême du point de contact du joint avec l'alésage 30 à l'état de repos au montage et pendant la course morte.

Au cours du déplacement préalable que nous avons appelé course morte, le joint ne se déforme pas, excepté un léger agrandissement de la zone de contact du talon 28 sur la paroi 32 sous la pression de celle-ci sur celui-là, la dépouille restant en grande partie ce qu'elle était au montage.

Une fois l'orifice de compensation 36 fermé par le passage de l'extrémité 22 de la lèvre extérieure 14, le déplacement du joint entraîne une montée en pression dans la chambre 38, le talon 28 se plaque sur toute sa surface contre la paroi 32 de la gorge 6, ce qui provoque un léger basculement de la lèvre extérieure 14. Le profil extérieur 20 de cette dernière étant bombé, l'extrémité 22 de ce profil extérieur s'écarte légèrement de l'alésage 30 pour former un espace 40 dans lequel s'infiltre un film d'huile favorisant la lubrification entre la matière élastique du joint et l'alésage.

Lors du relâchement de la pression, le renforcement 18 permet de bien ramener le joint en contact périphérique contre la paroi d'appui 32 de la gorge 6, ce qui assure une garde constante par rapport à l'orifice de compensation 36 en position de repos.

## Revendications

1. Joint annulaire d'étanchéité du type à double lèvre, destiné à un générateur de pression hydraulique qui comporte un cylindre (2) dont l'alésage (30) présente un orifice (36) de compensation de pression et un piston (4) qui présente une gorge (6) pour recevoir ledit joint (10); ledit joint (10) traverse avec le piston (4), à partir d'une position de repos, d'abord jusqu'à la fermeture dudit orifice (36) une zone courte sans montée en pression, appelée course morte, et ensuite une zone longue de montée en pression, correspondant à la phase active; la lèvre extérieure (14) dudit joint (19) présente une surface extérieure (20) de révolution légèrement bombée; le talon (28) du corps (12) dudit joint (10) est, à l'état libre, en dépouille à partir de son plus grand diamètre vers son plus faible diamètre, caractérisé en ce que le joint (10) est monté dans la gorge (6) de façon que le talon (28) du corps (12) dudit joint (10) soit, en position de repos et pendant la course morte, en dépouille à partir de son plus grand diamètre vers son plus faible diamètre de manière à présenter un contact selon un cercle avec la paroi (32) de la gorge (6), et que le talon (28) se plaque, pendant la phase active, sur toute sa surface contre la paroi (32) de la gorge (6), de manière à provoquer un léger basculement de la lèvre extérieure (14), la lèvre extérieure (14) présentant une section telle que:

— en position de repos et pendant la course morte, ladite section présente un contact étanche avec l'alésage (30) du cylindre (2) seulement selon le bord d'extrémité (22) de sa surface extérieure (20) qui est éloignée du talon (28),
— et telle que pendant la phase active le bord d'extrémité (22) s'écarte légèrement de l'alésage (30) lors dudit basculement.

2. Joint selon la revendication 1, caractérisé en ce que la lèvre intérieure (16) est raccordée au corps annulaire par l'intermédiaire d'une partie à section croissante (18) vers le corps annulaire pour offrir un raccordement renforcé de la lèvre extérieure.

3. Joint selon l'une quelconque des revendications 1 et 2, caractérisé en ce que la lèvre extérieure (14) est d'épaisseur croissante à partir de son extrémité libre (26) vers le corps annulaire pour offrir un raccordement renforcé de la lèvre extérieure.

4. Joint selon la revendication 1, caractérisé en ce qu'il présente une lèvre extérieure (14) plus courte que la lèvre intérieure (16).

5. Joint selon la revendication 1, caractérisé en ce quà l'état libre, la lèvre intérieure (16) s'étend dans une direction légèrement inclinée par rapport à l'axe du joint, l'extrémité libre de ladite lèvre intérieure étant plus proche dudit axe que l'extrémité de raccordement.

6. Joint selon la revendication 1, caractérisé en ce que la face d'extrémité libre (26) de la lèvre extérieure (14) forme un angle voisin de 75° par rapport à l'axe du joint (10).

## Patentansprüche

1. Doppellippen-Dichtring für einen hydraulischen Druckgeber, der einen Zylinder (2), in dessen Bohrung (30) eine Druckkompensationsöffnung (36) ausgebildet ist, und einen Kolben (4) aufweist, der mit einer Nut (6) zur Aufnahme des Dichtringes (10) versehen ist; wobei der Dichtring (10) zusammen mit dem Kolben (4) ausgehend von einer Ruhestellung zunächst bis zum Verschließen der Druckkompensationsöffnung (36) einen kurzen Bereich ohne Druckanstieg, Totbereich genannt, und anschließend einen langen Druckanstiegsbereich durchläuft, welcher der aktiven Phase entspricht; wobei die außen liegende Lippe (14) des Dichtringes (10) eine leicht gewölbte rotationssymmetrische Außenfläche (20) hat; und wobei die rückwärtige Stirnseite (28) des Körpers (12) des Dichtrings (10) im unbelasteten Zustand ausgehend von dessen größtem Durchmesser zu dessen kleinstem Durchmesser hin verjüngt ist, dadurch gekennzeichnet, daß der Dichtring (10) in der Nut (6) derart angeordnet ist, daß die rückwärtige Stirnseite (28) des Dichtrings (10) in der Ruhestellung und innerhalb des Totbereiches ausgehend von dessen größtem Durchmesser hin zu dessen kleinstem Durchmesser derart verjüngt ist, daß eine Berührung mit der Wand (32) der Nut (6) längs eines Kreises erhalten wird, während sich die rückwärtige Stirnseite (28) über die aktive Phase hinweg über ihre ganze Oberfläche gegen die Wand (32) der Nut (6) abstützt, derart, daß ein leichtes Verkippen der außen liegenden Lippe (14) erhalten wird, wobei die außen liegende Lippe (14) einen solchen Querschnitt aufweist, daß in der Ruhestellung und innerhalb des Totbereiches eine strömungsmitteldichte Berührung mit der Bohrung (30) des Zylinders (2) nur längs des Randes des Endes (22) ihrer Außenfläche (20) erhalten wird, welches von der rückwärtigen Stirnseite (28) abgelegen ist, und daß sich innerhalb der aktiven Phase der Rand des Endes (22) beim Verkippen geringfügig von der Bohrung (30) entfernt.

2. Dichtring nach Anspruch 1, dadurch gekennzeichnet, daß die innere Lippe (16) mit dem ringförmigen Körper über einen Abschnitt (18) in Verbindung steht, dessen Querschnitt in Richtung auf den ringförmigen Körper zu anwächst, um eine verstärkte Verbindung zur außen liegenden Lippe zu erhalten.

3. Dichtring nach Anspruch 1 oder 2, dadurch gekennzeichnet, daß die Dicke der außen liegenden Lippe (14) ausgehend von deren freiem Ende (26) hin zum ringförmigen Körper zunimmt, um eine verstärkte Verbindung zur außen liegenden Lippe zu gewährleisten.

4. Dichtring nach Anspruch 1, dadurch gekennzeichnet, daß die außen liegende Lippe (14) kürzer ist als die innere Lippe (16).

5. Dichtring nach Anspruch 1, dadurch gekennzeichnet, daß sich die innere Lippe (16) im unbelasteten Zustand in einer Richtung erstreckt, die zur Achse des Dichtringes geringfügig geneigt ist, wobei das freie Ende der inneren Lippe (16) näher an dieser Achse liegt als ihr Verbindungsende.

6. Dichtring nach Anspruch 1, dadurch gekennzeichnet, daß die Stirnseite des freien Endes (26) der außen liegenden Lippe (14) mit der Achse des Dichtringes (10) einen Winkel von ungefähr 75° einschließt.

## Claims

1. An annular seal of the double lip type for use with a pressure generator having a cylinder (2), the bore (30) of which is formed with a pressure compensating port (36), and having a piston (4) being formed with a groove (6) adapted to receive the seal (10); the seal (10) together with the piston (4) starting from an idle position being first moved by a short distance called dead travel to a position, wherein the pressure compensating port (36) will be closed and being thereafter moved through an extended pressure rise zone corresponding to the active phase; wherein the exterior lip (14) of the seal (10) has a slightly convex outer profile (20) of revolution; and wherein the sole (28) of the body (12) of the seal (10) slopes from its largest diameter to its smallest diameter in unstressed condition, characterized in that the seal (10) is arranged in the groove (6) such that the sole (28) of the seal (10) in the idle position and during the dead travel slopes from its largest diameter towards its smallest diameter in such manner that it makes circular contact with the wall (32) of the groove (6) and the sole (28) is in engagement with the wall (32) of the groove (6) throughout its surface during the active phase such that a slight tilting movement of the exterior lip (14) is optained, the exterior lip (14) having such cross-sectional shape that in the idle position and throughout the dead travel a fluid tight contact to the bore (30) of the cylinder (2) is established only along the edge of the end (22) of its exterior surface (20) being remote from the sole (28), and that throughout the active phase the edge of the end (22) is slightly spaced from the bore (30).

2. A seal as claimed in claim 1, characterized in that the interior lip (16) is attached to the annular body by way of a portion (18), the cross-section of which increases toward the annular body so as to provide reinforced attachment of the outer lip.

3. A seal as in claim 1 or 2, characterized in that the outer lip (14) increases in thickness from its free end (26) towards the annular body so as to provide reinforced attachment of the outer lip.

4. A seal as in claim 1, characterized in that it has an outer lip (14) being shorter than the inner lip (16).

5. A seal as in claim 1, characterized in that in the unstressed condition the inner lip (16) extends in a direction slighthly inclined relative to the axis of the seal, the free end of the inner lip being closer to said axis than the attached end.

6. A seal as in claim 1, characterized in that the free end (26) of the exterior lip (14) forms an angle of approximately 75° with the axis of the seal (10).

FIG. 1

FIG. 2

FIG. 3

7